# EUROPÄISCHE PATENTSCHRIFT

(11) **EP 2 166 303 B1**
(45) Veröffentlichungstag und Bekanntmachung des Hinweises auf die Patenterteilung: **01.10.2014**
(21) Anmeldenummer: 09010072.8
(22) Anmeldetag: 04.08.2009
(51) Int. Cl.: G01B 11/245, G01B 11/25, G01B 11/03, A61C 9/00

(54) **Vorrichtung zur Ermittlung der 3D-Koordinaten eines Objekts insbesondere eines Zahns**
Device for determining the 3D coordinates of an object, in particular a tooth
Dispositif destiné à la détermination de coordonnées 3D d'un objet, en particulier d'une dent

(30) Priorität: 18.09.2008 DE 102008047816
(43) Veröffentlichungstag der Anmeldung: 24.03.2010
(73) Patentinhaber: Steinbichler Optotechnik GmbH, 83115 Neubeuern (DE)
(72) Erfinder: Gandyra, Michael, Dr.-Ing., 83022 Rosenheim (DE); Steinbichler, Marcus, Dr., 83115 Neubeuern (DE)
(74) Vertreter: Zinnecker, Armin

(56) Entgegenhaltungen:
- DE-A1- 3 810 455
- DE-A1-102004 052 199
- JP-A- 61 162 706
- US-A- 5 712 803
- US-A1- 2002 171 847

## Beschreibung

Die Erfindung betrifft einen Scanner zur Abtastung eines oder mehrerer Zähne und eine Vorrichtung zur Ermittlung der 3D-Koordinaten eines oder mehrerer Zähne. Als Zähne im Sinne der Erfindung werden präparierte und nicht präparierte Zähne und auch Zahnersatz angesehen.

Vorrichtungen und Verfahren zur Ermittlung der 3D-Koordinaten eines Objekts sind bereits bekannt. In der EP 299 490 B2 wird ein Verfahren zur Herstellung von Zahnersatz beschrieben, bei dem Höhenschicht- oder Konturlinien auf den beschliffenen Zahn und seiner Umgebung erzeugt werden, die Linien mit einer optoelektronischen Einrichtung, insbesondere einer Videokamera, erfaßt werden, die erfaßten Werte in einen Rechner eingegeben werden und die räumliche Struktur des Zahnes und des Zahnersatzes berechnet wird. Anhand der so berechneten Struktur kann der Zahnersatz gefertigt werden.

Aus der prioritätsälteren, nicht vorveröffentlichten deutschen Patentanmeldung 10 2007 060 263.6 ist eine Vorrichtung zur Ermittlung der 3D-Koordinaten eines Objekts, insbesondere eines oder mehrerer Zähne oder eines Zahnmodells, mit einem Scanner zur Abtastung des Objekts und einer Auswerteeinrichtung zur Ermittlung der 3D-Koordinaten des Objekts aus den von dem Scanner aufgenommenen Bildern bekannt. Der Scanner umfaßt einen Projektor zum Projizieren eines Musters auf das Objekt und eine Kamera, die eine Aufnahmeoptik mit einer ersten Bildoptik und einer zweiten Bildoptik sowie einen Bildsensor umfaßt.

Aus der DE 38 10 455 A ist ein Verfahren zur berührungsfreien räumlichen Erfassung eines Zahnes oder einer Zahnreihe, die sich auf einer Grundplatte befinden, bekannt, bei dem mehrere miteinander gekoppelte Aufnahmeeinheiten über dem auf der Grundplatte befindlichen Zahn bewegt werden. Jede Aufnahmeeinheit umfaßt eine Lichtquelle, die einen spaltförmigen Lichtstrahl aussendet, und einen flächenhaften CCD-Sensor, der eine Empfangseinheit bildet.

Die DE 10 2004 052 199 A offenbart eine Streifenprojektions-Triangulationsanordnung zur dreidimensionalen Erfassung des Gesichts eines Menschen mit mehreren Projektoren und Kameras, die auf einem Träger angeordnet sind.

Aus der JP 61 162706 A ist eine Vorrichtung zum Messen der dreidimensionalen Position eines Festkörpers bekannt, von der der Festkörper mit schlitzförmigem Licht aus mehreren Projektoren bestrahlt wird und von mehreren Kameras aufgenommen wird.

Die US 5 712 803 A offenbart eine Vorrichtung zum Digitalisieren eines Objekts mit mehreren optischen Sensoren, die längs des Objekts bewegt werden.

Aus der US 2002/171847 A ist eine Vorrichtung zum Messen der dreidimensionalen Gestalt eines Objekts bekannt, die mehrere Projektoren und Kameras umfaßt.

Die DE 10 2006 013 584 A offenbart eine Vorrichtung zum Vermessen von Bauteilen mit einem Flächensensor, der in einem Meßzeitintervall einen Oberflächenabschnitt des Bauteils erfaßt, und mit einem Liniensensor, der in einem Meßzeitintervall eine Profillinie des Bauteils erfaßt.

Die US 2008 / 0101688 A1 zeigt eine Vorrichtung zum Bestimmen eines 3D-Modells eines Objekts, insbesondere eines Zahns, mit einem Projektor und einer oder zwei Kameras. Die aus Projektor und Kamera bestehende Einheit kann an verschiedenen Stellen positioniert werden.

Aus der US 5 257 184 A ist eine Vorrichtung zum Bestimmen der dreidimensionalen Oberfläche eines Zahns im Mund eines Patienten bekannt, die einen Projektor zum Projizieren eines Gitters auf den Zahn und zwei Kameras umfaßt. Das Licht wird durch Spiegel oder durch optische Fasern auf den Zahn geworfen.

Die US 2004 / 0252312 A1 offenbart eine Vorrichtung zum Scannen des dreidimensionalen Profils eines Zahnabdrucks außerhalb des Mundes eines Patienten mit zwei Projektoren und drei Kameras, die in einem Gehäuse abwechselnd angeordnet sind.

Aufgabe der Erfindung ist es, einen verbesserten Scanner und eine verbesserte Vorrichtung der eingangs angegebenen Art vorzuschlagen.

Erfindungsgemäß wird diese Aufgabe durch einen Scanner mit den Merkmalen des Anspruchs 1 gelöst. Der Scanner dient zur Abtastung eines oder mehrerer Zähne, wobei einer oder mehrere oder alle Zähne präpariert sein können. Der Begriff des Präparierens umfaßt einerseits die zahnmedizinische Präparation, also beispielsweise das Beschleifen eines Zahnstumpfs, und andererseits die Präparation, die zum Scannen eines Zahns mit optischer Meßtechnik vorteilhaft oder notwendig ist, beispielsweise das Einsprühen des zu scannenden Bereichs mit weißem Spray.

Der Scanner umfaßt einen Träger, auf dem mehrere Projektoren zum Projizieren eines Musters auf das Objekt und mehrere Kameras zur Aufnahme des Objekts in einer Anordnung vorgesehen sind. Die Projektoren und Kameras können als "Array" angeordnet sein. Die erfindungsgemäße Anordnung der Projektoren und Träger ist insbesondere zur Anwendung bei beengten Platzverhältnissen und in schwer zugänglichen Bereichen geeignet, wie sie insbesondere in der Mundhöhle eines Patienten vorliegen, in der die Zähne gescannt werden sollen. Durch die Vielzahl der Kameras ist gewährleistet, daß eine ausreichende Anzahl verschiedener Bilder für die Auswertung erstellt werden kann. Durch die Vielzahl der Projektoren ist gewährleistet, daß eine ausreichende Anzahl von Mustern auf die zu scannenden Bereiche der Zähne projiziert werden kann.

Der erfindungsgemäße Scanner kann insbesondere als miniaturisierter Scanner ausgebildet werden. Er ist zum Abtasten von Zähnen im Mund eines Patienten besonders geeignet. Er ist allerdings auch für andere Anwendungen besonders geeignet, bei denen die abzutastenden Objekte schwer zugänglich sind. Insbesondere kann der erfindungsgemäße Scanner für eine endoskopische Digitalisierung und/oder in schwer zugänglichen Kavitäten und/oder Kanälen von Maschinen und/oder Apparaten geeignet sein.

Jeder Bildsensor erzeugt ein 2D-Bild. Aus den 2D-Bildern können die 3D-Koordinaten des Objekts bestimmt werden. Dies kann durch ein meßtechnisches Verfahren geschehen, das auf der Auswertung von mehreren 2D-Bildern, auf denen dieselben Objektpunkte abgebildet sind, basiert. Bei diesem Verfahren können mit geeigneten Algorithmen in verschiedenen 2D-Bildern dieselben Merkmale gefunden und korreliert werden. Bei einem kalibrierten System, wenn also die Lage und Orientierung der Kameras bekannt sind, kann zu jedem Objektpunkt, der sich in verschiedenen 2D-Bildern befindet, ein Abstandswert und damit eine 3D-Koordinate - im Koordinatensystem des Scanners - berechnet werden. Um in den verschiedenen 2D-Bildern dieselben Merkmale des Objekts zu finden, werden Muster auf das Objekt projiziert. Durch das oder die projizierten Muster können in verschiedenen 2D-Bildern die einander entsprechenden Objektpunkte gefunden werden. Auf diese Weise kann aus den 2D-Bildern eine 3D-Punktwolke bestimmt werden, die die Oberfläche des Objekts repräsentiert.

Ferner ist es möglich, mehrere 3D-Punktwolken zu einer gesamten 3D-Punktwolke zusammenzufügen, die das gesamte Objekt repräsentiert. Hierfür können mehrere 3D-Punktwolken aus jeweils verschiedenen Richtungen bestimmt werden. Der Scanner kann um das Objekt bewegt werden, um mehrere oder alle Bereiche des Objektes zu erfassen.

Vorteilhafte Weiterbildungen sind in den Unteransprüchen beschrieben.

Die Projektoren und Kameras sind in einer flächenhaften Anordnung auf dem Träger vorgesehen.

Die Projektoren und Kameras können auf dem Träger abwechselnd angeordnet sein. Dabei ist es möglich, neben einem Projektor eine Kamera anzuordnen und dies dann zu wiederholen, so daß die Projektoren und Kameras im Verhältnis 1:1 alternierend angeordnet sind. Dieses Muster kann in entsprechender Weise in die Fläche ausgedehnt werden. Es ist allerdings auch möglich, mehr Projektoren als Kameras oder mehr Kameras als Projektoren vorzusehen. Die Anordnung kann regelmäßig oder unregelmäßig sein.

Die Projektoren umfassen jeweils eine Lichtquelle, eine Maske und eine Projektoroptik . Bei der Lichtquelle handelt es sich vorzugsweise um eine LED. Die Projektoroptik kann aus einer oder mehreren Linsen bestehen. Die Maske kann von einer LCD gebildet werden.

Die Maske und die Projektoroptik, insbesondere eine Linse der Projektoroptik, bilden eine Verbundeinheit . Vorteilhaft ist es, wenn die Maske auf die Projektoroptik, insbesondere auf eine Linse der Projektoroptik, aufgedampft ist. Die Maske ist insbesondere als aufgedampfte Chrommaske hergestellt.

Die Kameras umfassen jeweils einen Bildsensor, insbesondere einen CCD-Sensor oder einen CMOS-Sensor, und eine Kameraoptik . Die Kameraoptik kann eine oder mehrere Linsen .

Es ist möglich, daß jeder Projektor und/oder jede Kamera jeweils eine Projektoroptik bzw. Kameraoptik aufweist. In bestimmten Fällen kann es allerdings vorteilhaft sein, mehrere oder alle Projektoroptiken und/oder mehrere oder alle Kameraoptiken zu einer Systemoptik zusammenzufassen. Die Systemoptik kann einstückig sein. Sie kann als Verbund mehrerer oder aller Optiken bzw. Linsen hergestellt sein.

Der Träger, auf dem die Projektoren und Kameras vorgesehen sind, kann eben ausgestaltet sein. In bestimmten Anwendungsfällen ist es allerdings vorteilhaft, wenn der Träger abgewinkelte Bereiche aufweist. Insbesondere kann der Träger abgewinkelte Seiten aufweisen. Der Träger ist vorzugsweise konkav ausgebildet.

Nach einer weiteren vorteilhaften Weiterbildung weist der Träger die Form eines Gebißbogens auf.

Die der Erfindung zugrundeliegende Aufgabe wird bei einer Vorrichtung zur Ermittlung der 3D-Koordinaten eines oder mehrerer Zähne durch die Merkmale des Anspruchs 6 gelöst. Die Vorrichtung umfaßt einen erfindungsgemäßen Scanner zur Abtastung des oder der Zähne und eine Auswerteeinrichtung, insbesondere einen Computer, insbesondere einen PC einschließlich der zugehörigen Software, zur Ermittlung der 3D-Koordinaten des Objekts aus den von dem Scanner aufgenommenen Bildern.

Für die Durchführung der Erfindung ist ein Tracking-System nicht erforderlich. In bestimmten Fällen kann es allerdings vorteilhaft sein, wenn die erfindungsgemäße Vorrichtung ein Tracking-System zum Ermitteln der Lage und Orientierung des Scanners umfaßt. Das Tracking-System kann dadurch gebildet werden, daß der Scanner einen oder mehrere Sensoren zur Erkennung von Lage und Orientierung des Scanners aufweist. Insbesondere kann das Tracking-System dadurch gebildet werden, daß der Scanner Beschleunigungssensoren und/oder Gyrometer aufweist. Es ist möglich, daß die Informationen des oder der Sensoren zur Erkennung von Lage und Orientierung des Scanners und/oder des oder der Beschleunigungssensoren und/oder des oder der Gyrometer, insbesondere deren 6D-Informationen, durch zeitliche Integration auf die Position und Drehstellung des Scanners zurückgerechnet werden. Stattdessen oder zusätzlich kann allerdings auch ein anderes Tracking-System verwendet werden, insbesondere ein Infrarot-Tracking-System.

Ausführungsbeispiele der Erfindung werden nachstehend anhand der beigefügten Zeichnung im einzelnen erläutert. In der Zeichnung zeigt
- Fig. 1: einen Scanner in einer Ansicht von oben,
- Fig. 2: einen Schnitt längs der Linie A-A in Fig. 1,
- Fig. 3: den Scanner gemäß Fig. 1 und 2 mit einer Gruppe von Zähnen,
- Fig. 4: den Scanner gemäß Fig. 3 in einer nach rechts geneigten Lage,
- Fig. 5: den Scanner gemäß Fig. 3 in einer nach links geneigten Lage,
- Fig. 6: eine Abwandlung des Scanners gemäß Fig. 1 bis 5, dessen Träger abgewinkelte Seiten aufweist,
- Fig. 7: den Scanner gemäß Fig. 6 in zwei perspektivischen Darstellungen,
- Fig. 8: einen Schnitt durch den Scanner gemäß Fig. 6 und 7 und
- Fig. 9: einen weiteren abgewandelten Scanner, dessen Träger die Form eines Gebißbogens aufweist.

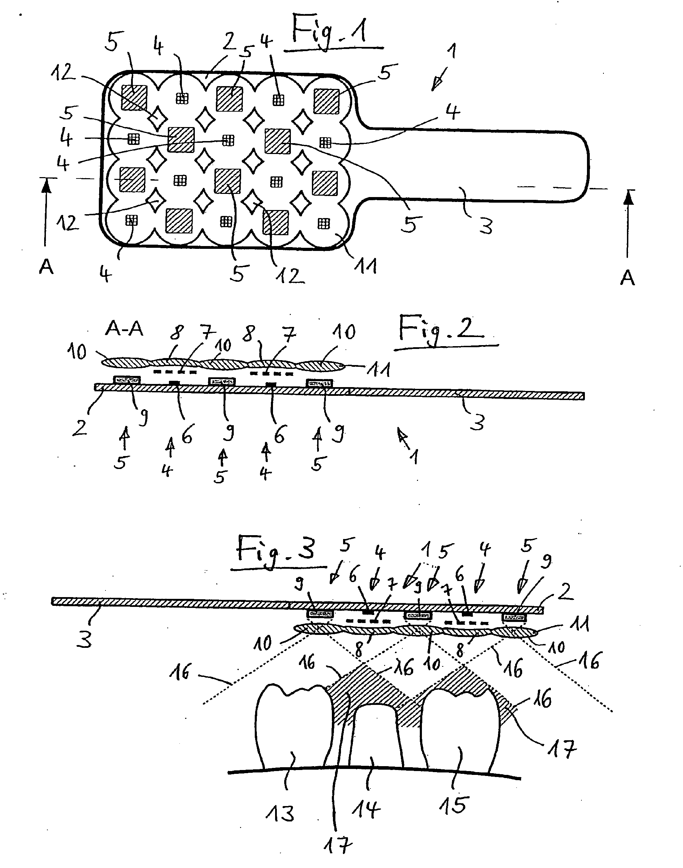

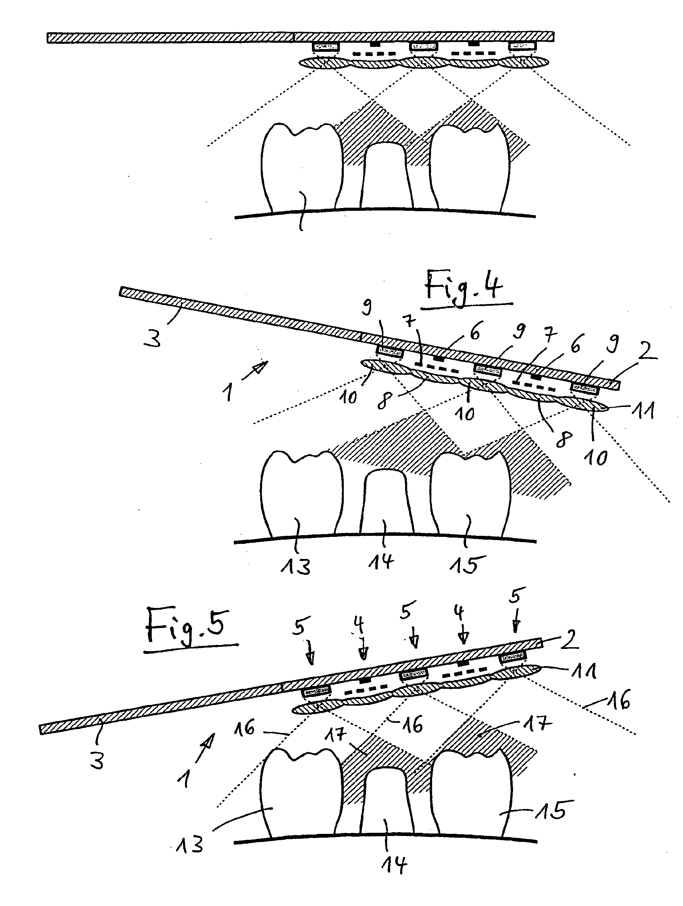

Fig. 1 bis 5 zeigen einen Scanner 1, der einen ebenen Träger 2 und ein Griffteil 3 umfaßt. Auf dem Träger 2 sind zehn Projektoren 4 und zehn Kameras 5 nebeneinander in einer flächenhaften Anordnung ("Array") vorgesehen. Die Projektoren 4 und die Kameras 5 sind auf dem Träger 2 abwechselnd angeordnet. In der obersten Reihe befinden sich von links nach rechts eine Kamera 5, ein Projektor 4, eine Kamera 5, ein Projektor 4 und eine Kamera 5. In der zweiten Reihe befinden sich von links nach rechts ein Projektor 4, eine Kamera 5, ein Projektor 4, eine Kamera 5 und ein Projektor 4. Die dritte und vierte Reihe sind wie die erste und zweite Reihe ausgestaltet. In beiden Richtungen wechseln sich die Projektoren 4 und die Kameras 5 im Verhältnis 1:1 ab.

Aus Fig. 2 ist ersichtlich, daß jeder Projektor 4 eine Lichtquelle 6, eine Maske 7 und eine Projektoroptik 8 umfaßt. Die Lichtquelle 6 wird von einer LED gebildet. Die Maske 7 ist als Dia oder LCD ausgebildet. Die Projektoroptik 8 besteht aus einer Linse.

Jede Kamera 5 umfaßt einen Bildsensor 9 und eine Kameraoptik 10. Der Bildsensor 5 ist ein CCD-Bildsensor oder CMOS-Bildsensor. Die Kameraoptik 10 besteht aus einer Linse.

Bei der Ausführungsform nach Fig. 1 bis 5 sind alle Projektoroptiken 8 und alle Kameraoptiken 10 zu einer Systemoptik 11 zusammengefaßt. Die Systemoptik 11 ist aus einem Stück hergestellt. Sie weist in den jeweiligen Kreuzungspunkten zweier benachbarter Projektoren 4 und Kameras 5 jeweils Lücken 12 auf.

In Fig. 3 bis 5 sind zusätzlich zu dem Scanner 1 noch drei Zähne 13, 14, 15 dargestellt. Der Zahn 14 ist beschliffen, die Nachbarzähne 13, 15 sind nicht beschliffen und bilden die Umgebung des beschliffenen Zahnes 14. Ferner sind in Fig. 3 bis 5 die kegelförmigen Sichtfelder 16 der Bildsensoren 9 eingezeichnet. Die Bereiche 17, die von jeweils mindestens zwei Bildsensoren 9 erfaßt, also "gesehen" werden, sind schraffiert dargestellt.

Die Fig. 3 bis 5 zeigen eine mögliche zeitliche Abfolge beim Scannen der Zähne 13, 14, 15. Dadurch, daß der Scanner 1 um die Zähne 13, 14, 15 herumgeführt wird, können genügend Daten für die gesamte Objektrepräsentation erhalten werden.

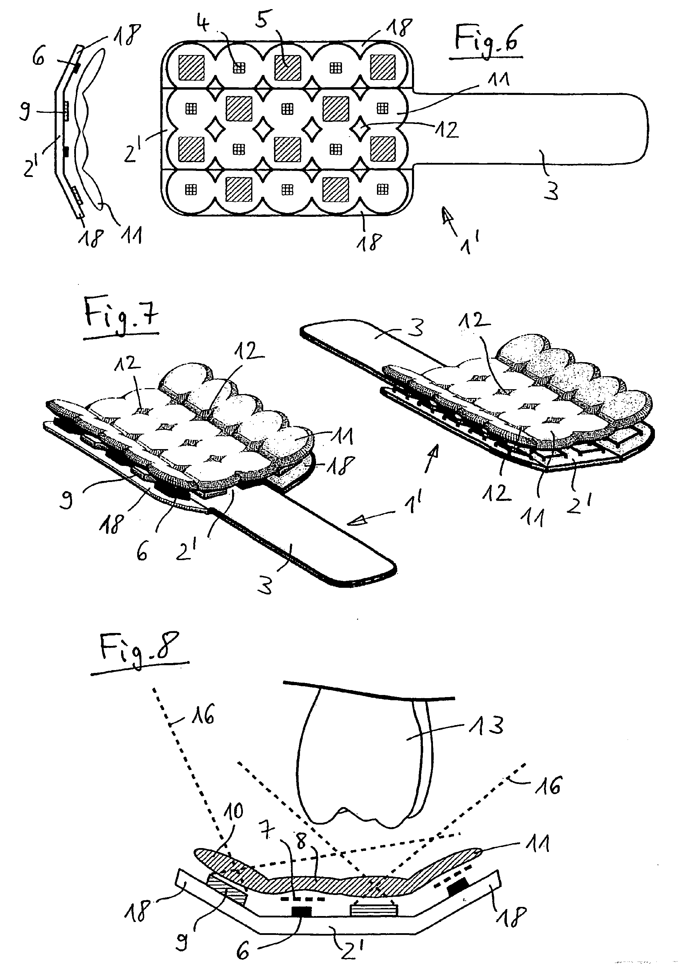

Bei der in Fig. 6 bis 8 gezeigten Abwandlung des Scanners werden bereits beschriebene Bestandteile, die mit denselben Bezugszeichen versehen sind, nicht erneut erläutert. Hier weist der Träger 2' des Scanners 1' abgewinkelte Bereiche, nämlich abgewinkelte Seiten 18 auf. Der Träger 2' hat eine konkave Form. Die abgewinkelten Seiten 18 dienen dazu, um noch mehr und qualitativ bessere Daten an den Zahnflanken aufnehmen zu können.

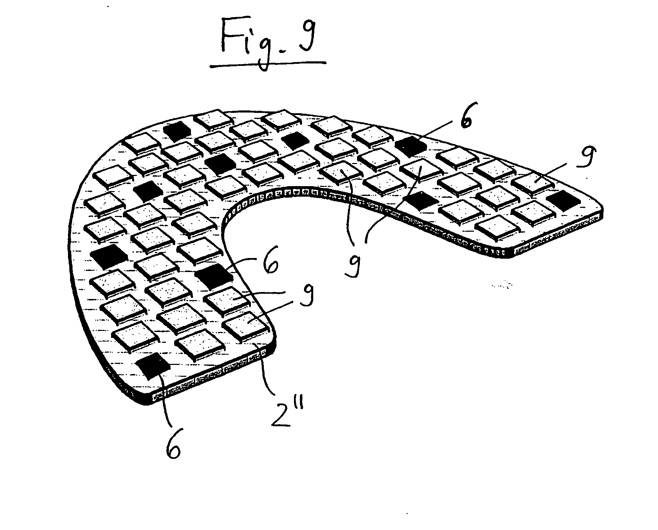

Fig. 9 zeigt eine weitere Abwandlung eines Scanners mit einem Träger 2", der die Form eines Gebißbogens aufweist. Die Projektoren 4 und die Kameras 5 sind in der Form eines Gebißbogens angeordnet.

Das meßtechnische Verfahren zum Bestimmen der 3D-Koordinaten der Objekte bzw. Zähne kann auf einer photogrammetrischen Auswertung von mehreren Einzelaufnahmen basieren, also auf dem Verfahren, das Objekt mit mehreren Kameras zu beobachten und mit geeigneten Algorithmen dieselben Merkmale in den Einzelaufnahmen zu finden und zu korrelieren. Durch eine Einzelaufnahme kann ein bestimmter Bereich des Objekts bzw. Zahns erfaßt werden. Um das gesamte Objekt bzw. den gesamten Zahn oder mehrere oder alle Zähne und möglicherweise auch deren Umgebung zu erfassen, können die von den Kameras aufgenommenen Einzelaufnahmen zu einer Gesamtaufnahme zusammengefügt werden. Dieser Vorgang wird als "registrieren" bzw. "matchen" bezeichnet. Der Scanner kann um das Objekt bewegt werden, um mehrere oder alle Bereiche des Objektes zu erfassen. Auf diese Weise kann aus mehreren Gesamtaufnahmen eine gesamte ObjektRepräsentation hergestellt werden.

Das zu projizierende Muster kann stochastisch oder geordnet sein. Es kann aus Linien oder Kreuzgittern bestehen. Es kann sich um ein zeitlich konstantes oder zeitlich veränderliches bzw. sequentielles Muster handeln. Das Muster kann ein beliebiges graphisches Muster sein (Punkte, Linien, Gitter etc.). Bei dem Muster kann es sich um ein Grauwertmuster oder um ein Farbmuster handeln. Das Muster kann mit Durchlicht projiziert werden, beispielsweise als Chrom-Maske (Dia) oder als LED-Projektion. Das Muster kann allerdings auch durch Reflektion projiziert werden, beispielsweise als LCOS- oder DLP-Projektion.

Durch die Erfindung ist es möglich, die 3D-Koordinaten eines Objekts zu bestimmen. Dies kann dadurch geschehen, daß die 3D-Koordinaten über die Korrelation gleicher Merkmale in mehreren, mindestens zwei, 2D-Bildern berechnet werden. Nach diesem Verfahren lassen sich in zwei oder mehr 2D-Bildern, die aus unterschiedlichen Richtungen aufgenommen worden sind, zugehörige gleiche Bildpunkte finden. Über die Kalibration der Kameras und eine Triangulation bzw. Bündeltriangulation lassen sich damit die 3D-Koordinaten der Objektpunkte berechnen. Um die Zuordnung der gleichen Merkmale in den 2D-Bildern eindeutig herstellen zu können, werden Muster projiziert. Bei diesem Verfahren sind die Projektoren nicht Bestandteil der Kalibirierung; sie sind unabhängig von dem photogrammetrischen Kamerasystem.

Es ist allerdings auch möglich, andere Verfahren zur Bestimmung der 3D-Koordinaten des Objekts durchzuführen. Insbesondere können Verfahren der "Einbild-Meßtechnik" angewandt werden, also Verfahren, mit denen man aus einem einzigen 2D-Bild die 3D-Koordinaten des Objekts berechnen kann. Um dieses Verfahren durchführen zu können und um mehrere sequentielle 2D-Bilder desselben Bereichs zu vermeiden, muß das aufgenommene 2D-Bild alle Informationen zur Berechnung der 3D-Koordinaten enthalten. Um dies zu gewährleisten wird üblicherweise ein Muster auf das Objekt projiziert. Um dieses Muster zu projizieren können unterschiedliche Eigenschaften des Lichts ausgenutzt werden. Beispielsweise kann es sich bei dem Muster um ein Kreuzgitter mit unterschiedlichen Farben handeln, wie dies in der DE 102 12 364 A1 beschrieben ist. Bei diesem Verfahren muß der Projektor zusammen mit der Kamera kalibriert sein. Das Verfahren kann in der Weise durchgeführt werden, daß mit dem 2D-Bild aus einer Kamera und mit dem projizierten Muster die 3D-Koordinaten berechnet werden und daß diese 3D-Koordinaten mit den Koordinaten, die aus einem 2D-Bild aus einer anderen Kamera und aus dem projizierten Muster berechnet wurden, korreliert und optimiert werden.

Bei dem wahlweise zu verwendenden Trackingsystem kann es sich um ein optisches oder ein interferometrisches Trackingsystem handeln. Es ist allerdings auch möglich, das Trackingsystem durch an dem Scanner befestigte Sensoren zur Erkennung von Lage und Orientierung des Scanners und/oder Beschleunigungssensoren und/oder Gyrometer zu realisieren, mit deren Hilfe über die zeitliche Integration auf Geschwindigkeit und Position des Scanners zurückgerechnet werden kann. Die Beschleunigungssensoren können drei Translationsinformationen liefern. Die Gyrometer können drei Rotationsinformationen liefern, also Informationen über die Orientierung des Scanners. Besonders vorteilhaft ist es, sowohl Beschleunigungssensoren als auch Gyrometer vorzusehen, um dadurch 6D-Informationen zu erhalten.

## Patentansprüche

1. Scanner zum Abtasten eines oder mehrerer Zähne (13, 14, 15) im Mund eines Patienten
mit einem Träger (2) zur Anwendung in der Mundhöhle eines Patienten, auf dem eine Vielzahl von Projektoren (4) zum Projizieren von Mustern auf den oder die Zähne und eine Vielzahl von Kameras (5) zur Aufnahme des oder der Zähne in einer Anordnung vorgesehen sind,
wobei die Projektoren (4) jeweils eine Lichtquelle (6), eine Maske (7) und eine Projektoroptik (8) umfassen,
wobei die Maske (7) und die Projektoroptik (8) eine Verbundeinheit bilden, wobei die Kameras (5) jeweils einen Bildsensor (9) und eine Kameraoptik (10) umfassen
und wobei die Projektoren (4) und Kameras (5) in einer flächenhaften Anordnung auf dem Träger (2) vorgesehen sind.

2. Scanner nach Anspruch 1, **dadurch gekennzeichnet, daß** die Projektoren (4) und die Kameras (5) auf dem Träger (2) abwechselnd angeordnet sind.

3. Scanner nach einem der vorhergehenden Ansprüche, **dadurch gekennzeichnet, daß** mehrere oder alle Projektoroptiken (8) und/oder mehrere oder alle Kameraoptiken (10) zu einer Systemoptik (11) zusammengefaßt sind.

4. Scanner nach einem der vorhergehenden Ansprüche, **dadurch gekennzeichnet, daß** der Träger (2') abgewinkelte Bereiche (18) aufweist.

5. Scanner nach einem der vorhergehenden Ansprüche, **dadurch gekennzeichnet, daß** der Träger (2, 2') die Form eines Gebißbogens aufweist.

6. Vorrichtung zur Ermittlung der 3D-Koordinaten eines oder mehrerer Zähne (13, 14, 15) mit einem Scanner (1) zur Abtastung des oder der Zähne nach einem der Ansprüche 1 bis 5 und einer Auswerteeinrichtung zur Ermittlung der 3D-Koordinaten des Objekts aus den von dem Scanner aufgenommenen Bildern.

7. Vorrichtung nach Anspruch 6, **gekennzeichnet durch** ein Tracking-System zum Ermitteln der Lage und Orientierung des Scanners (1).

## Claims

1. A scanner for scanning one or more teeth (13, 14, 15) in the mouth of a patient,
with a carrier (2) for use in the oral cavity of a patient, on which a plurality of projectors (4) for projecting patterns onto the tooth or the teeth and a plurality of cameras (5) for recording the tooth or the teeth are provided in an array,
wherein the projectors (4) each comprise a light source (6), a mask (7) and a projector optics (8),
wherein the mask (7) and the projector optics (8) form a composite unit, wherein the cameras (5) each comprise an image sensor (9) and a camera optics (10),
and wherein the projectors (4) and cameras (5) are provided on the carrier (2) in a two-dimensional arrangement.

2. The scanner according to claim 1, **characterized in that** the projectors (4) and the cameras (5) are alternately arranged on the carrier (2).

3. The scanner according to any of the preceding claims, **characterized in that** several or all projector optics (8) and/or several or all camera optics (10) are combined to one system optics (11).

4. The scanner according to any of the preceding claims, **characterized in that** the carrier (2') has angled regions (18).

5. The scanner according to any of the preceding claims, **characterized in that** the carrier (2, 2') has the shape of a dental arc.

6. A device for determining the 3D coordinates of one or more teeth (13, 14, 15) with a scanner (1) for scanning the tooth or the teeth according to any of claims 1 to 5 and an evaluation means for determining the 3D coordinates of the object from the images recorded by the scanner.

7. The device according to claim 6, **characterized by** a tracking system for determining the location and orientation of the scanner (1).

## Revendications

1. Scanner destiné à explorer une ou plusieurs dents (13, 14, 15) dans la bouche d'un patient
avec un support (2) en vue de l'application dans la cavité buccale d'un patient, sur lequel une multitude de projecteurs (4) en vue de la projection d'échantillons sur la ou les dents et une multitude de caméras (5) en vue de la prise de vue de la ou des dents sont prévues,
les projecteurs (4) comprenant respectivement une source lumineuse (6), un cache (7) et une optique pour projection (8),
le cache (7) et l'optique pour projection (8) constituant une unité combinée,
les caméras (5) comprenant respectivement un capteur d'image (9) et une optique de caméra (10)
et les projecteurs (4) et les caméras (5) étant prévus dans une disposition plane sur la surface (2).

2. Scanner selon la revendication 1, **caractérisé en ce que** les projecteurs (4) et les caméras (5) sont disposés en alternance sur le support (2).

3. Scanner selon une quelconque des revendications précédentes, **caractérisé en ce que** plusieurs ou toutes les optiques pour projection (8) et/ou plusieurs ou toutes les optiques de caméra (10) sont regroupées en une optique de système (11).

4. Scanner selon une quelconque des revendications précédentes, **caractérisé en ce que** le support (2') présente des zones coudées (18).

5. Scanner selon une quelconque des revendications précédentes, **caractérisé en ce que** le support (2, 2') présente la forme d'un arc de dentition.

6. Dispositif en vue du calcul des coordonnées 3D d'une ou plusieurs dents (13, 14, 15) avec un scanner (1) en vue de l'exploration de la ou des dents selon une quelconque des revendications 1 à 5 et un équipement d'évaluation en vue du calcul des coordonnées 3D de l'objet issu des images prises par le scanner.

7. Dispositif selon la revendication 6, **caractérisé par** un système de suivi en vue du calcul de la position et de l'orientation du scanner (1).
